Europäisches Patentamt

European Patent Office

Office européen des brevets

(11) Publication number: **0 094 124**
**B1**

(12) **EUROPEAN PATENT SPECIFICATION**

(45) Date of publication of patent specification: **06.08.86**

(51) Int. Cl.⁴: **G 06 F 15/20**

(21) Application number: **83200630.8**

(22) Date of filing: **03.05.83**

(54) **Method and computer tomography device for determining a tomographic image with elevated resolution.**

(30) Priority: **12.05.82 NL 8201942**

(43) Date of publication of application:
**16.11.83 Bulletin 83/46**

(45) Publication of the grant of the patent:
**06.08.86 Bulletin 86/32**

(84) Designated Contracting States:
**BE DE FR GB SE**

(56) References cited:

**IEEE TRANSACTIONS ON NUCLEAR SCIENCE,
vol. NS-26, no. 2, April 1979, pages 2895-2902,
IEEE, New York, USA G. KOWALSKI:**

**"Multislice reconstruction from twin-cone
beam scanning"**

**OPTIK, vol. 55, no. 1, February 1980, pages
67-86, Stuttgart, DE. G. KOWALSKI et al.: "New
means for picture formation in computer
tomography"**

(73) Proprietor: **N.V. Philips' Gloeilampenfabrieken
Groenewoudseweg 1
NL-5621 BA Eindhoven (NL)**

(72) Inventor: **op de Beek, Johannes Catharina
Antonius
c/o INT. OCTROOIBUREAU B.V. Prof. Holstlaan 6
NL-5656 AA Eindhoven (NL)**
Inventor: **Lobregt, Steven
c/o INT. OCTROOIBUREAU B.V. Prof. Holstlaan 6
NL-5656 AA Eindhoven (NL)**

(74) Representative: **Faessen, Louis Marie et al
INTERNATIONAAL OCTROOIBUREAU B.V. 6
Prof. Holstlaan
NL-5656 AA Eindhoven (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

The invention relates to a computer tomography device for determining a radiation attenuation distribution in a plane of a body, which device comprises:

—at least one source for producing a flat fan-shaped beam of penetrating radiation, by means of which the body is irradiated from a multitude of directions passing through a central point and regularly distributed over 360° along a plurality of measuring paths diverging from the source and located in the plane;

—a row of detectors for detecting radiation passed through the body for supplying a group of measuring data for each direction, which are a measure for the attenuation of the radiation in the body occurring along the plurality of diverging measuring paths, the radiation emitted from the source and passing through the central point striking a detector halfway between the centre and edge thereof, which detector is situated at the centre of the row of detectors spanned by the fan-shaped beam, while a measuring path having a maximum width $a$ which is measured along a line which is at right angles to the measuring path and which passes through the central point;

—a calculating device having a memory for storing measuring data and for deriving from the groups of measuring data sub-groups of measuring data, which have been measured along (imaginary) measuring paths with the same direction;

—a calculating device having a filtering device for carrying out a convolution or a Fourier transformation, a frequency filtering and a Fourier back transformation of each sub-group of measuring data;

—a calculating device having a backprojection device for distributing and adding values of each subgroup of filtered measuring data respectively over and to a matrix of memory cells of the memory forming an image matrix,

—and a display device for displaying the content of the image matrix.

The invention further relates to a method of determining a radiation attenuation distribution in a plane of a body, in which the body is irradiated from a multitude of directions passing through a central point and distributed over 360° with a flat fan-shaped beam of penetrating radiation diverging from a point for determining a group of measuring data for each measuring direction, which have been measured along a plurality of measuring paths located in the plane of the body and are a measure for the attenuation of the radiation in the body occurring along the plurality of measuring paths diverging from said one point, whereby, an imaginary line passing through a central point and through said one point in a central measuring path, enclosing passes at a quarter of an angle at one side of this central measuring path, while a measuring path has a maximum width $a$ which is measured along a line which is at right angles to the measuring path and passes through the central point, after which subgroups are derived from the groups of measuring data, which subgroups are measured along (imaginary) measuring paths with the same measuring direction, whereupon each subgroup is filtered either through a convolution calculation or through a Fourier transformation, a filtering and a Fourier back-transformation and is backprojected onto an image matrix.

Such a method and computer tomography device are known from the US—PS—4,051,379, in which the row of detectors is arranged asymmetrically to a central line which passes through the central point and the X-ray radiation source in order to increase the resolution. The measuring data which have been measured along parallel measuring paths (in opposite directions) overlapping each other in part, are combined in a subgroup and further processed in the manner described, for example, in US—PS—3,983,398. It is then required to store the measuring data measured from the various directions before they can be further processed. The radiation source must have fulfilled such a large rotation about the central point that all the measuring data associated with a subgroup of parallel (overlapping) measuring paths are determined, after which the subgroup of measuring data can be filtered and backprojected. The increase of the resolution is obtained by increasing the required storage space, by a delay at the beginning of the processing of the measuring data and by a larger number of calculating operations by doubling of the number of measuring paths per subgroup.

The invention has for its object to provide a computer tomography device, in which a shorter waiting time is required before the processing of the measuring data is started, the filtering is carried out much more rapidly (factor 2) and an image with a high resolution is obtained.

The computer tomography device according to the invention is therefore characterized in that the calculating device determines from the groups of measuring data measured over 360° for each measuring direction two subgroups of measuring data, the measuring data of one subgroup being measured in a direction opposite to that in which the measuring data of the other subgroup are measured, while the distance between two measuring paths associated with two adjacent measuring data in a a subgroup is at most $a$ and larger than $\frac{1}{2}a$, in that the filtering device has a frequency response curve with a maximum for the frequency $(2a)^{-1}$ and zero for the frequencies 0 and $1/a$ for filtering each of the two subgroups separately, and in that the backprojection device distributes and adds each pair of interleaved subgroups of filtered measuring data with an interpolation distance of $a/2$ respectively over and to the image matrix, the number of memory cells of which is larger than the square of the number of detectors spanned by the beam of diverging radiation.

In the computer tomography device according to the invention, the filtering of a subgroup is already started as soon as the source has fulfilled with respect to the central point a rotation larger than the apical angle enclosed by the diverging beam of radiation; therefore, the storage of the groups of measuring data requires much less storage space (factor A). The filtering of the subgroups requires less calculating time (factor 2) because the number of measuring data per subgroup has been halved. The filtering behaviour of the computer tomography device is determined by the frequency response curve of the (convolution) filtering device and the backprojection device. The frequency response curve of the filtering device has zero points for the frequencies zero and 1/a, *a* being the maximum distance between two measuring paths in a subgroup, and has a maximum for the frequency $(2a)^{-1}$. The filtering device, which according to the prior art filters simultaneously the measuring data, which have been measured along parallel and anti-parallel measuring paths, has a frequency response curve Q(R) which is determined by $Q(R)=|R|$ for the frequency $R \leqslant 1/a$. If a linear interpolation is used, the backprojection device has a frequency response curve represented by $\sin c^2 (\pi \cdot \frac{1}{2} a \cdot R)$, R being the frequency to be imaged in the image matrix; consequently, there is a zero point for the frequency $R=2/a$. The overall frequency transfer function is determined by the product of the two said frequency response curves.

It can also be recognized that, if the size of an image element is approximately equal to the maximum distance *a* between the measuring paths, which is a practical choice, although the filtering device according to the prior art permits a larger frequency range, the (high) frequencies to be ultimately imaged in the image matrix are considerably limited by the frequency response curve of the backprojection device and the filtering behaviour of the image matrix. In the computer tomography device according to the invention, the filtering device produces a considerable attenuation of the high frequency, but, because the backprojection device passes these frequencies only in a strongly attenuated form, this is not a serious limitation of the frequencies ultimately imaged in the image matrix. In the computer tomography device according to the invention, an optimum high resolution is attained with a given number of detectors with a minimum calculating time to carry out the filtering of the measuring data and with a memory adapted to a minimum extent with respect to its size.

The method according to the invention is characterized in that two subgroups are selected from the groups of measuring data for each measuring direction, measuring data of the first subgroup being determined along measuring paths which are antiparallel to measuring paths along which the measuring data of the second subgroup are determined, in each subgroup the distance between two measuring paths being at most *a* and larger than $\frac{1}{2}a$ and filtering of each subgroup being carried out with a filtering device, the frequency response curve of which has a maximum for the frequency $(2a)^{-1}$ and zero for the frequencies zero and 1/a, after which each first subgroup of filtered measuring data is interleaved with the measuring data of the associated second subgroup and the interleaved sub-groups of measuring data are backprojected, and interpolation distance between the measuring data being a/2.

The invention will be described with reference to embodiments shown in the drawing, in which:

Figure 1 shows diagrammatically a computer tomography device according to the invention,

Figure 2 shows the principle of the measuring arrangement of the device shown in Figure 1,

Figure 3 shows frequency response curves of a filtering device for computer tomography devices,

Figure 4 shows frequency response curves of different backprojection devices, and

Figures 5a and 5b show frequency response curves of a computer tomography device according to the invention and of such a device according to the prior art.

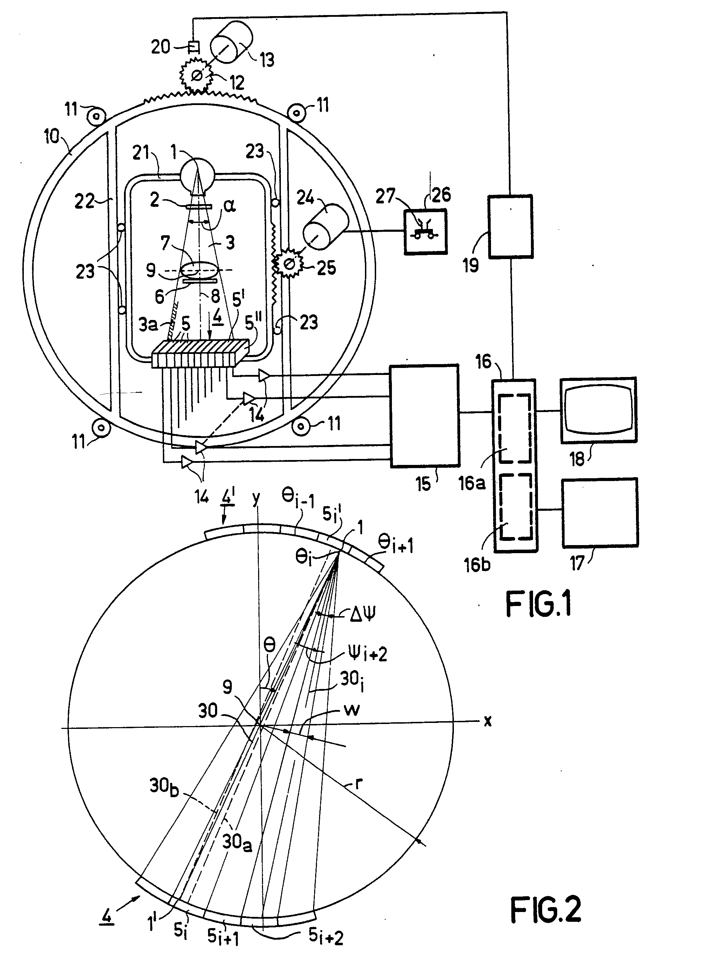

A computer tomography device of the kind shown diagrammatically in Figure 1 comprises a radiation source 1, which may preferably be an X-ray tube, for producing a flat beam 3 of X-ray radiation to be diaphragmed by a diaphragm 2 and diverging through an angle α, which beam may have a thickness of 3 to 35 mm. The radiation beam 3 is incident upon a row 4 of separate detectors 5, which measure each radiation reaching the relevant detector 5 through a measuring path 3a. The width of a measuring path and the relative distance of the measuring paths determine the spatial accuracy with which an object 7 lying on a table 6 is scanned and is constructed. In order to increase this accuracy (resolution), the detector row 4 is arranged asymmetrically to a central ray 8, which passes from the source 1 through a central point 9 (of rotation).

In a preferred embodiment, the central ray 8 strikes a detector 5 (see fig. 2) at the centre of the row 4 halfway between the centre and the edge of the detector 5, so that $\frac{1}{4}$ of the detector 5 lies on one side and $\frac{3}{4}$ of this detector on the other side of the central ray 8. The detector row 4 comprises, for example, 576 detectors 5, α being=43.2° and the distance between the source 1 and the detector row 4 amounting to 1 m. The row 4 of detectors 5 may be composed, for example, of an elongate gas-filled ionization chamber, in which flat electrodes are arranged in a row parallel to each other.

The assembly of radiation source 1 and detector row 4 is mounted on a supporting frame 10 which is arranged so as to tbe rotatble about the central point 9 so that a layer of the object 7 can be irradiated in different directions (lying in one plane) with the radiation beam 3. The supporting frame 10, which is guided with the aid of bearings 11, is driven by means of a motor 13 in a transmission gear 12. The drive may be continuous, but also intermittent, the radiation source 1 emitting in the first case preferably a radiation pulse.

The detectors 5 supply measuring signals which are applied through an amplifier 14 to a signal converter 15, in which the measuring signals are digitized, after which the signals are supplied to a calculating device 16. The measuring signals are corrected by the calculating device 16 for "offset", logarithmized and calibrated with reference to logarithm and calibration tables present in a memory 17, after which the measuring values are stored in the memory 17. An image matrix of the radiation attenuation distributiion to be determined by the calculating device 16, in which the measuring data are processed by a filtering device 16a, which carries out either a convolution or a Fourier transformation, a filtering and a backtransformation, and then by a backprojection device 16b, which distributes the filtered measuring data over memory cells of an image matrix stored in the memory 17, can be displayed on a display device 18 (monitor).

A counter 19 counts the number of pulses which is generated by a pulse generator 20 during rotation of the supporting frame 10 so that a counter position of the counter 19 is a measure for the orientation of the supporting frame 10 and hence is a measure for the angular rotation $\theta$ of the successive measuring directions.

It has proved advantageous to choose the distance between the radiation source 1 and the object 7 so that it can be adapted to the size of the object 7. Therefore, the radiation source 1 and the detector row 4 are mounted on a support 21, which can be displaced along guiding rails 22 on bearings 23 and by means of a transmission gear 25 coupled with a motor 24. By means of a switch 27, the motor 24 can be driven through a control circuit 26.

For the sake of clarity, in Figure 2 the arrangement of radiation source 1 and detector row 4 is shown in an x—y co-ordinate system. The measurement value to be supplied by the detector $5_i$ in the position shown is assumed to be measured along a measuring path 30a which passes through the source 1 and the centre of the detector $5_i$. The distance between the measuring paths at the area of the central point 9 is $a = r \cdot \Delta\psi$, r being the distance between the source 1 and the central point 9 $\Delta\psi$ being the angle enclosed between two measuring paths. It can be recognized that after rotation of the source 1 with detectors 5 through an angle $\Delta\psi$ in the direction $\theta$ the measuring path associated with a measurement value and situated between the source 1 and the detector $5_{i+1}$ is parallel to the measuring path between the source 1 and the detector $5_i$ before the rotation was fulfilled. It can be recognized that from the groups of measuring signals measured in the different positions $\theta_i$ subgroups of measuring signals can be selected which are measured along parallel paths. The distance between two adjacent paths amounts to

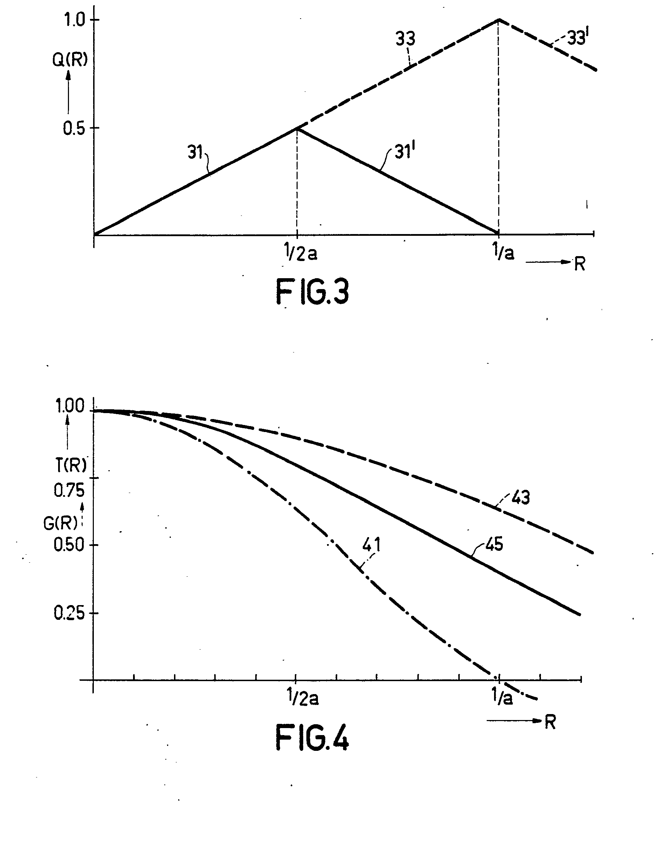

$r.\cos\psi_i\Delta\psi$, $\psi_i$ being the angle enclosed by the central ray 30 and the connection line $30_i$ between the source 1 and a detector $5_i$. Such a subgroup is filtered with the aid of the calculating device 16 (Figure 1), the filtering curve of a filter Q(R) having a cut-off frequency $R_{max}$ of $(2a)^{-1}$ and may have a form as indicated in Figure 3 by a straight line 31.

In Figure 3, the spatial frequency is plotted on the abscissa and the amplitude of the (convolution) filter Q(R) is plotted on the ordinate. The example shown in Figure 3 of a frequency response curve 31 (cut-off frequency $(2a)^{-1}$) of a filtering action of the calculating device 16 according to the prior art is described, for example, in "Indian Journal of Pure and Applied Physics", Vol. 9, November 1971, pp. 997—1003. The curves 31 and 33 shown in Figure 3 are parts of periodical functions resulting from a discreet Fourier transformation. These functions will be described more fully hereinafter. The filtering to be effected should be tuned to the sampling frequency and is determined by the distance $a$ between the measuring paths and is inversely proportional thereto. It should be appreciated that thereby also the resolution of the image to be reconstructed of an object 7 is defined.

In order to increase the resolution, it has already been suggested to arrange the detector row 4 asymmetrically to the central ray 30 (Figure 2) of the source 1, while this ray, passing through the central point 9, strikes the detector $5_i$, $\frac{1}{4}$ of the detector $5_i$ lying on one side of the central ray 30 and the remaining $\frac{3}{4}$ part of the detector $5_i$ on the other side of the ray 30. The proposed asymmetrical arrangement of the detector $5_i$ is obtained by rotation through a quarter of the aperture angle ($\Delta\psi/4$) of a detector $5_i$, the source 1 being the centre of this rotation. The detector $5_i$ supplies a measurement value measured along a measuring path 30a. After a rotation of the source 1 and the detector row 4 through an angle $\theta$ of 180°, the detector $5_i$ supplies a measurement value associated with the measuring path 30b. The measuring paths 30a and 30b are parallel and have a relative distance $a/2$ (at the area of the centre of rotation 9). It should be appreciated that from the groups of measurement values (determinative in the different source positions $\theta_i$ and $\theta_i + 180°$) subgroups of measurement values can be selected, the distance between two adjacent measuring paths being $a \cdot \cos\psi_i \cdot \Delta\psi/2$. According to the aforementioned publications, such a subgroup is allowed to be filtered by a filter Q(R), the response curve 33 of which is indicated by a broken line in Figure 3. The cut-off frequency is in this case $1/a$, which would mean a doubling of the resolution. On the other hand, $i$ a large memory is required to store all the measurement values (these are at least $250 \times 223$ measurement values if the number of detectors is 250 and the number of source positions is $\theta_i$ 180° for a rotation of 180°); $ii$ the filtering cannot be started until all the required measurement values have been stored and selected (duration a few seconds) and $iii$ the required calculating operations for the filtering are doubled and consequently require a longer calculating time or a larger calculating capacity.

In Figure 3, the frequency response curve $Q(R)$ of a filtering by the calculating device according to the invention is indicated by lines 31 and 31'. In the filtering according to the invention, the measurement values of a subgroup with the same measuring direction are also processed. The subgroup of measuring signals to be filtered is measured along measuring paths which have a relative distance $a = (r \cdot \cos\psi_i \cdot \Delta\psi)$. A second subgroup, which is measured in the opposite direction, is consequently not interleaved with the first subgroup before the filtering. The filtering can thus be started as soon as the source 1 (Figure 2) has been rotated through an angle $\theta = \alpha$ (apical angle of radiation beam) because then all the measurement values of a first subgroup have already been measured. The first filtered subgroups are stored until the associated second filtered subgroups have been measured and filtered, after which the first filtered subgroup and the associated second filtered subgroup are interleaved (the filtered measurement value of a subgroup is in a position between two measurement values of the other subgroup). Such a composite overall group consequently would also be obtained if the measurement values had been interleaved before the filtering and had been processed by means of a filter, the response curve of which is indicated in Figure 3 by lines 31 and 31'. This can be seen as follows. A group of measurement values obtained according to the prior art (Mutual distance a) if filtered with filtering coefficients (group I) $f_0$, $f_1$, $f_2$, ... $f_N$, $f_N$ being the Nyquist frequency and being determined by $(2a)^{-1}$ (straight line 31 in Figure 3). If the distance between the measurement values should be $\frac{1}{2} \cdot a$, the Nyquist frequency is $1/a$ (straight line 33, Figure 3). If now a first subgroup of measurement values is filtered according to the invention with the coefficients $f_0$, $f_1$, $f_2$, ... $f_N$ and if afterwards a subgroup filtered in the same manner is interleaved therewith, the subgroups in fact have been filtered with the coefficients $f_0$, O, $f_1$, O, $f_2$, O, ... $f_N$, the Nyquist frequency $F_N$ bein $1/a$ and the coefficients $f_1$, $f_2$, etc. being associated with frequencies which are two times higher than the frequencies associated with the coefficients $f_1$, $f_2$ etc. of the group I.

After having been interleaved, the filtered measurement values are backprojected in a manner known *per se*. It should be noted that in this case the first filtered subgroups of measuring signals should be stored, which requires storage space and waiting time. The backprojection of the first two interleaved subgroups can be started as soon as the second subgroup (antiparallel to the first subgroup) has been composed and filtered. However, the speed at which such a second subgroup is filtered is four times higher than in case the subgroups should have been interleaved before the filtering (twice the number of measuring data and twice the number of filtering coefficients). The gain to be achieved consists in that the subgroups (still to be filtered are processed more rapidly, which can be effected simultaneously during the backprojection of subgroups of measuring data already filtered beforehand and subsequently interleaved.

However, in principle it is also possible that each filtered subgroup is backprojected without being interleaved with an associated filtered subgroup. Between each pair of filtered measurement values of each subgroup the values "O" should then be interposed. It is clear that in this case the overall calculating time for carrying out the backprojection is doubled.

The ultimately obtained information in the image matrix then has been subjected to an overall frequency filtering which is the product of the frequency response curves of the filtering device, of the backprojection device and of the image matrix.

If the filtered measurement values to be backprojected are subjected to a linear interpolation, in fact a convolution of a triangular function (having a base width $a$) is carried out on the filtered measurement values (with a distance of $a/2$). A convolution in the spatial range can also be considered as a filtering with a filter $T(R)$ in the frequency range. The aforementioned triangular function has a frequency response curve which is determined by $T(R) = \text{sinc}^2(\pi \cdot \frac{1}{2}a \cdot R)$. In Figure 4 this curve is indicated by a line 45. It should be appreciated that (linear) interpolations in the backprojection of the filtered measurement values lead to an essential unavoidable attenuation of the higher spatial frequencies.

The filtered measurement values are backprojected onto an image matrix. It should be appreciated that the size of the image elements of which the image matrix is composed is also determinative of the maximum spatial frequency to be imaged. If the size of a (square) image element is P, the frequency response curve of the image matrix is the Fourier transform $G(R)$ of the block "P" is:

$$G(R) = \text{sinc}(\pi \cdot P \cdot R.).$$

In Figure 4 the frequency response curve 41 of the image matrix with a size P of the image elements is shown, the distance P being assumed to be equal to the value $a$. If the image matrix has an image element size of $\frac{1}{2}P$, this image matrix has a frequency response curve

$$G(R) \cdot \text{sinc}(\pi \cdot P \cdot R/2)$$

indicated by a broken line 43. Such an image matrix requires a memory having a four times larger number of memory cells.

If the measurement values of the antiparallel subgroups are interleaved before the filtering (with a cut-off frequency $2/a$, curve 33, Figure 3) and are backprojected after filtering (filter $T(R) = \text{sinc}^2(\pi \cdot a/2 \cdot R)$) in an image matrix having an image element size $\frac{1}{2}a$ (curve 43,

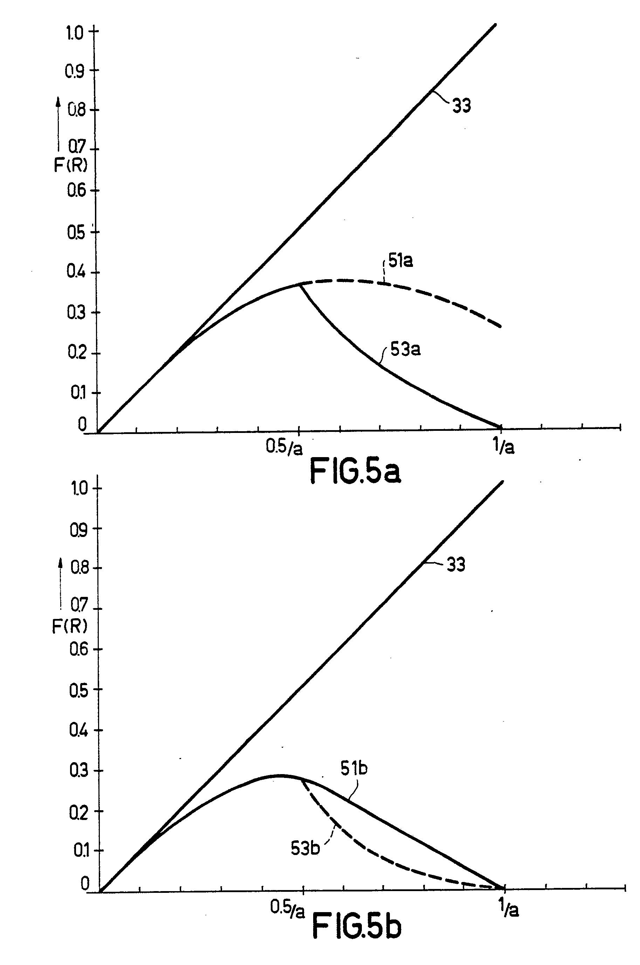

$G(R)=\text{sinc}(\pi \cdot a \cdot R)$, (Figure 4), the overall response curve will have a variation as indicated by the broken line 51a in Figure 5a. The overall filtering behaviour of the computer tomography device is determined by the product

$$F(R)=Q(R) \cdot T(R) \cdot G(R)$$

of the frequency-response curves of the convolution filter $Q(R)$; the filter $T(R)$ due to the interpolation and the filter $G(R)$ due to the frequency limit the influence of the image matrix.

If the subgroups of measuring signals in the device according to the invention are filtered (before first being interleaved; curves 31 and 31', Figure 3), the overall response curve will have a variation as indicated by the full line 53a in Figure 5a. It has been found that for frequencies smaller than 0.5/a no loss occurs. However, the loss for the frequencies between 0.5/a and 1/a is to a high extent not essential because these frequencies in themselves only add additional information to the ultimate image and to a high extent carry along "noise signals". In the device according to the invention, in which the measurement values are filtered immediately after measuring and by means of an associated filter with a cut-off frequency of 1/a, an image with a high resolution is thus obtained, the noise being suppressed to a large extent, while a saving in calculating time is realized and the waiting time from the beginning of the measurement to the beginning of the filtering of the measuring data is shortened considerably (from 2 seconds to 0.5 second).

If the filtered measurement values are backprojected onto an image matrix having as image element size $a$, the filtering is determined by

$$G(R)=\text{sinc}(\pi \cdot a \cdot R)$$

(curve 41, Figure 4). The overall filtering behaviour $F(R)$ of the convolution device according to the invention is then as indicated by the curve 53b in Figure 5b. The overall filtering behaviour of a device according to the prior art is indicated by the curve 51b. It can now been seen very clearly that the behaviour of the device according to the invention with respect to the high frequencies (0.5/a) does not deviate considerably from that of the device according to the prior art.

In the above description of the frequency-limiting properties of computer tomography devices, the distance $a$ between the various measuring paths has been taken into account. However, the width of the beam of X-ray radiation has not been taken into account. If it is assumed that the width of such a beam is also $a$ along a measuring path at the area of the centre of rotation 9 (and with respect to the intensity has, viewed at right angles to the direction of radiation, a rectangular variation), such a beam will have a frequency ($R$)-limiting behaviour which is indicated by

$$B(R)=\text{sinc}(\pi \cdot a \cdot R).$$

The curves 51a, b and 53a, b from Figures 5a and 5b should be multiplied once more by the function $B(R)$ so that the difference between the curves 51a and 53a and between 51b and 53b becomes smaller once more for the frequencies between 0.5/a and 1/a.

It should be noted that in the example described above the so-called "Ramp" filter was used for filtering the subgroups. However, the invention is not limited to this filter and can be used equally effectively in computer tomography devices in which the high-frequency content of the measuring signals is already attenuated (this is the case in C.T. devices in which the so-called "Shepp" filter is utilized), see, for example, I.E.E.E. Trans. Nucl. Science, NS-21, 21—43, 1971. In such devices, the overall frequency response curves for high frequencies will in fact become located closer to each other.

**Claims**

1. A method of determining a radiation attenuation distribution in a plane of a body, in which the body is irradiated in a multitude of directions ($\theta_i$) passing through a central point ($g$) and distributed over 360° with a flat fan-shaped beam of penetrating radiation diverging from one point (1) for determining a group of measuring data for each measuring direction, which are measured along a number of measuring paths ($30_i$) located in the plane of the body and which are a measure for the attenuation of the radiation in the body occurring along the number of measuring paths ($30_i$) diverging from said one point whereby, an imaginary line passing through the central point ($g$) and through said one point in a central measuring path (30a), passes at a quarter of an angle ($\Delta\psi$) at one side of this central measuring path (30a), while a measuring path has a maximum width $a$ which is measured along a line which is at right angles to the measuring path ($30_i$) and passes through the central point ($g$), after which from the groups of measuring data subgroups are determined which are measured along (imaginary) measuring paths with the same measuring direction, whereupon each subgroup is filtered either through a convolution calculation or through a Fourier transformation, a filtering and a Fourier backtransformation and is backprojected onto an image matrix, characterized in that from the groups of measuring data for each measuring direction two subgroups are selected, measuring data of the first subgroup being measured along measuring paths which are anti-parallel to measuring paths along which the measuring data of the second subgroup are determined, while in each subgroup the distance between two measuring paths is at most $a$ and larger than $\frac{1}{2}a$ and the filtering of each subgroup is carried out by means of a filtering device the frequency response curve of which has a maximum for the frequency $(2a)^{-1}$ and zero for

the frequencies 0 and 1/a, whereupon each first subgroup of filtered measuring data is interleaved with the measuring data of the associated second subgroup and the interleaved subgroups of measuring data are backprojected, an interpolation distance between the measuring data being a/2.

2. A computer tomography device for determining a radiation attenuation distribution in a plane of a body, which device comprises:

—at least one source (1) for producing a flat fan-shaped beam (3) of penetrating radiation for irradiating the body along a number of measuring paths (30$_i$) diverging from the source and located in the plane for a multitude of directions ($\theta_i$) passing through a central point (g) and distributed regularly over 360°;

—a row of detectors (4) for detecting radiation passed through the body along the measuring paths for supplying for each direction ($\theta_i$) a group of measuring data which are a measure for the attenuation of the radiation occurring in the body along the number of diverging measuring paths, the radiation (30b) emitted by the source (1) and passing through the central point (g) striking a detector (5$_i$) halfway between the centre and the edge thereof, which detector is situated, at the centre of the row of detectors spanned by the fan-shaped beam while a measuring path 30$_i$ has a maximum width a which has been measured along a line which is at right angles to the measuring path and which passes through the central point (g);

—a calculating device (16) with a memory (17) for storing measuring data and for determining subgroups of measuring data which are measured along (imaginary) measuring paths with the same direction;

—a calculating device (16a) with a filtering device for carrying out a convolution or a Fourier transformation, a frequency filtering and a Fourier backtransformation of each subgroup of measuring data;

—a calculating device (16b) with a backprojection device for distributing and adding values of each subgroup of filtered measuring data respectively over and to a matrix of memory cells of the memory which constitute an image matrix;

—a display device (18) for displaying the content of the image matrix, characterized in that the calculating device (16) determines for each measuring direction two subgroups of measuring data from the groups of measuring data measured over 360°, the measuring data of one subgroup being measured in a direction opposite to that in which the measuring data of the other subgroup are measured, while the distance between two measuring paths associated with two adjacent measuring data in a subgroup is at most a and larger than a/2, in that the filtering device (16a) has a frequency response curve with a maximum for the frequency (2a)$^{-1}$ and zero for the frequencies 0 and 1/a, for filtering each of the two subgroups separately, and in that the backprojection device distributes each pair of interleaved subgroups of filtered measuring data with an interpolation distance a/2 over the image matrix and adds these subgroups to this image matrix, the number of memory cells of which is larger than the square of the number of detectors spanned by the beam of diverging radiation.

3. A computer tomography device as claimed in Claim 2, characterized in that the number of memory cells is about four times the square of the number of detectors spanned by the fan-shaped beam.

**Patentansprüche**

1. Verfahren zum Bestimmen einer Strahlungsschwächungsverteilung in einer Ebene eines Körpers, bei dem der Körper in einer Viezahl von über 360° verteilten Richtungen (8$_i$) durch einen zentralen Punkt (9) mit einem flachen, aus einem Punkt (1) divergierenden, fächerförmigen durchdringenden Strahlungsbündel zur Bestimmung einer Gruppe von Messdaten für jede Messrichtung angestrahlt wird, die entlang einer Anzahl von Messwegen (30$_i$) in der Ebene des Körpers gemessen sind und ein Mass für die Schwächung der Strahlung im Körper entlang der Anzahl von aus diesem einen Punkt divergierenden Messwegen (30$_i$) sind, wobei eine imaginäre Linie durch den zentralen Punkt (9) und durch den genannten einen Punkt in einem zentralen Messweg (30a) geht und unter einem Viertel eines Winkels ($\Delta\psi$) an einer Seite dieses zentralen Messweges (30a) verläuft, wobei ein Messweg eine maximale Breite a hat, die entlang einer Linie senkrecht zum Messweg (30$_i$) gemessen ist und durch den zentralen Punkt (9) geht, wonach aus den Gruppen von Messdaten Untergruppen bestimt werden, die entlang (imaginärer) Messwege mit der gleichen Messrichtung gemessen werden, wonach jede Gruppe entweder durch eine Faltung oder durch eine Fourier-Transformation, eine Filterung und eine Fourier-Rücktransformation gefiltert und in eine Bildmatrix rückprojiziert wird, dadurch gekennzeichnet, dass aus den Gruppen von Messdaten für jede Messrichtung zwei Untergruppen gewählt werden, wobei die Messdaten der ersten Untergruppe entlang Messwege gemessen werden, die anti-parallel zu den Messwegen verlaufen, entlang deren die Messdaten der zweiten Untergruppe bestimmt werden, während in jeder Untergruppe der Abstand zwischen zwei Messwegen höchstens a und grösser als ½a ist und die Filterung jeder Untergruppe mit Hilfe einer Filtereinrichtung ausgeführt wird, deren Frequenzgang ein Maximum für die Frequenz (2a)$^{-1}$ und Null für die Frequenzen O und 1/a hat, wonach jede erste Untergruppe gefilterter Messdaten in den Messdaten der zugeordneten zweiten Untergruppe verschachtelt, die verschachtelten Untergruppen von messdaten rückprojiziert werden und ein Interpolationsabstand zwischen den Messdaten a/2 beträgt.

2. Computertomographiegerät zur Bestimmung

# 0 094 124

einer Strahlungsabschwächungsverteilung in einer Ebene eines Körpers, das folgendes enthält:

—zumindest eine Quelle (1) zum Erzeugen eines flachen fächerformigen Strahls (3) von durchdringenden Strahlung zum Anstrahlen des Körpers entlang einer Anzahl aus der Quelle divergierender und in der Ebene für eine Vielzahl von Richungen ($8_i$) durch einen zentralen Punkt (9) gehender und auf 360° regelmässig verteilter Messwege ($30_i$),

—eine Reihe von Detektoren (4) zum Detektieren von Strahlung durch den Körper entlang der Messwege zum Erzeugen einer Gruppe von Messdaten für jede Richtung ($8_i$), wobei Messdaten ein Mass für die Abschwächung der Strahlung im Körper entlang der Anzahl divergierender Messwege sind, wobei die Strahlung (30b) aus der Quelle (1) und durch den zentralen Punkt (9) einen Detektor ($5_i$) halbwegs zwischen der Mitte und seinem Rand trifft, und dieser Detektor sich in der Mitte der Reihe vom fächerförmigen Strahl angestrahlter Detektoren befindet, wobei ein Messweg $30_i$ eine maximale Breite a hat, die entlang einer Linie gemessen wurde, die senkrecht zum Messweg verläuft und durch den zentralen Punkt (9) geht,

—einen Rechner (16) mit einem Speicher (17) zur Speicherung von Messdaten und zur Bestimmung von Untergruppen von Messdaten, die entlang (imaginärer) Messwege mit der gleichen Richtung gemessen werden,

—einen Rechner (16a) mit einer Filtereinrichtung zum Durchführen einer Faltung oder einer Fourier-Transformation, einer Frequenzfilterung und einer Fourier-Rücktransformation jeder Untergruppe von Messdaten,

—einen Rechner (16b) mit einer Rückprojektionseinrichtung zum Verteilen und Addieren von Werten jeder Untergruppe gefilterter Messdaten auf eine bzw. zu einer Matrix von Speicherzellen des Speichers, die eine Bildmatrix darstellen,

—eine Anzeigeanordnung (18) zum Anzeigen des Inhalts der Bildmatrix, dadurch gekennzeichnet, dass der Rechner (16) für jede Messrichtung zwei Untergruppen von Messdaten aus den Gruppen von über 360° gemessenen Messdaten bestimmt, wobei die Messdaten einer Untergruppe in einer Richtung gegenüber der gemessen werden, in der die Messdaten der anderen Untergruppe gemessen werden, während der Abstand zwischen zwei, zwei benachbarten Messdaten in einer Untergruppe zugeordneten Messwegen höchstens a und grösser and a/2 ist, dass die Filtereinrichtung (16a) einen Frequenzgang mit einem Maximum für die Frequenzy $(2a)^{-1}$ und Null für die Frequenzen 0 and 1/a zum getrennten Filtern jeder der beiden Untergruppen hat, und dass die Rückprojektionseinrichtung jedes Paar verschachtelter Untergruppen gefilterter Messdaten mit einem Interpolationsabstand a/2 auf die Bildmatrix verteilt und diese Untergruppen zu dieser Bildmatrix addiert, deren Anzahl von Speicherzellen grösser als das Quadrat der Anzahl der von der divergierenden Strahlung angestrahlten Detektoren ist.

3. Computertomographiegerät nach Anspruch 2, dadurch gekennzeichnet, dass die Anzahl der Speicherzellen etwas das vierfache des Quadrats der Anzahl der vom fächerförmigen Strahl angestrahlten Detektoren ist.

**Revendications**

1. Procédé pour déterminer une image de répartition d'atténuation de rayonnement dans un plan d'un corps, procédé suivant lequel ce corps est irradié, suivant plusieurs directions ($\theta_i$) passant par un point central (9) et réparties régulièrement sur 360°, par un faisceau plan en forme d'éventail de rayonnement pénétrant divergeant depuis un point de divergence (1) pour déterminer de la sorte un groupe de données de mesure pour chaque direction de mesure, mesurées le long de plusieurs voies de mesure ($30_i$) situées dans le plan du corps, les données en question étant une mesure de l'atténuation que subit le rayonnement dans le corps le long des différentes voies de mesure ($30_i$) divergeant depuis ledit point (1), alors qu'une ligne imaginaire passant par le point central (9) et par ledit point de divergence (1) dans une voie de mesure centrale (30a) enferme avec cette voie de mesure centrale (30a) un angle égal au quart de l'angle ($\psi$) entre deux voies de mesure adjacentes, une voie de mesure ayant une largeur maximale a qui est mesurée le long d'une ligne qui est perpendiculaire à la voie de mesure ($30_i$) et passe par le point central (9), après quoi, à partir des groupes de données de mesure, il est défini des sous-groupes de données de mesure mesurées le long de voies de mesure (imaginaires) avec la même direction de mesure, alors qu'ensuite, chaque sous-groupe de données de mesure est filtré par l'intermédiaire soit d'un calcul de convolution soit d'une transformation de Fourier, d'un filtrage et d'une transformation inverse de Fourier avant de subir finalement une projection rétrograde dans un ensemble matriciel d'image, caractérisé en ce qu'à partir des groupes de données de mesure, il est formé pour chaque direction de mesure deux sous-groupes de données de mesure, alors que les données de mesure du premier sous-groupe sont mesurées le long de voies de mesure qui sont en antiparallèles aux voies de mesure le long desquelles sont mesurées les données de mesure du deuxième sous-groupe, tandis que dans chaque sous-groupe, la distance entre deux voies de mesure est au maximum égale à a et est supérieure à $\frac{1}{2}a$ et que le filtrage de chaque sous-groupe est effectué avec un dispositif de filtrage dont la caractéristique de fréquence a un maximum pour la fréquence $(2a)^{-1}$ et des zéros pour les fréquences 0 et 1/a, après quoi chaque premier sous-groupe de données de mesure filtrées est entrelacé avec les données de mesure du deuxième sous-groupe correspondant, et que les sous-groupes entrelacés de données de mesure subissent la projection rétrograde, une distance d'interpolation entre les données de mesure étant égale à a/2.

2. Dispositif de tomographie par ordinateur pour déterminer une image de répartition d'atténuation de rayonnement dans un plan d'un corps examiné, ce dispositif de tomographie comportant:

—au moins une source (1) pour engendrer un faisceau plan en forme d'éventail (3) de rayonnement pénétrant destiné à irradier le corps le long de plusieurs voies de mesure (30$_i$) situées dans ledit plan et divergeant depuis la source suivant plusieurs directions θ$_i$ passant par un point central (9) et réparties régulièrement sur 360°;

—une rangée de détecteurs (4) pour détecter du rayonnement ayant passé par ledit corps le long des voies de mesure pour fournir de la sorte, pour chaque direction (θ$_i$), un groupe de données de mesure qui sont une mesure pour l'atténuation que subit le rayonnement dans le corps le long des différentes voies de mesure divergentes, alors que le rayonnement (30b) en provenance de la source (1) et passant par le point central (9), frappe un détecteur (5$_i$), situé dans le centre d'une rangée de détecteurs embrassés par le faisceau en forme d'éventail, à mi-chemin, entre le centre de la rangée et le bord du détecteur, et qu'une voie de mesure (30$_i$) présente une largeur maximale a qui est mesurée le long d'une ligne qui est perendiculaire à la voie de mesure et passe par le point central (9);

—un dispositif de calcul (16) ayant une mémoire (17) pour emmagasiner des données de mesure et pour définir, à partir des groupes de données de mesure, des sous-groupes de données de mesure qui sont mesurées le long de voies de mesure ·(imaginaires) ayant la même direction;

—un dispositif de calcul (16a) ayant un dispositif de filtrage pour effectuer une convolution ou une transformation de Fourier, un filtrage de fréquence et une transformation inverse de Fourier de chaque sous-groupe de données de mesure;

—un dispositif de calcul (16b) avec un dispositif de projection rétrograde pour répartir des valeurs de chaque sous-groupe de données de mesure filtrées sur un ensemble matriciel de cellules de la mémoire formant un ensemble matriciel d'image et pour ajouter lesdites valeurs audit ensemble matriciel, et un dispositif de reproduciton (18) pour reproduire le contenu de l'ensemble matriciel d'image, caractérisé en ce qu'à partir des groupes de données de mesure mesurées sur 360°, le dispositif de calcul (16) définit pour chaque direction de mesure deux sous-groupes de données de mesure, alors que les données de mesure d'une de ces deux sous-groupes sont mesurées dans la direction opposée à celle le long laquelle sont mesurées les données de mesure de l'autre sous-groupe, tandis que la distance entre deux voies de mesure appartenant à deux données de mesure adjacentes dans un sous-groupe atteint au maximum la valeur a et est supérieure à a/2, que le dispositif de filtrage (16a) a une caractéristique de fréquence ayant un maximum pour la fréquence $(2a)^{-1}$ et des zéros pour les fréquences 0 et 1/a pour le filtrage séparé de chacun des deux sous-groupes, et que le dispositif de projection rétrograde répartit sur l'ensemble matriciel d'image et ajoute à celui-ci chaque paire de sous-groupes entrelacés de données de mesure avec une distance d'interpolation a/2, le nombre de cellules à fonction de mémoire dans ledit ensemble matriciel d'image étant supérieur au carré de la valeur du nombre de détecteurs embrassés par le faisceau de rayonnement divergent.

3. Dispositif de tomographie par ordinateur selon la revendication 2, caractérisé en ce que le nombre de cellules à fonction de mémoire atteint environ le quadruple du carré de valeur du nombre de détecteurs embrassés par le faisceau de rayonnement en forme d'éventail.

0 094 124

FIG.1

FIG.2

FIG.3

FIG.4

FIG.5a

FIG.5b

3